(19) Europäisches Patentamt
European Patent Office
Office européen des brevets

(11) **EP 2 015 096 A1**

(12) **DEMANDE DE BREVET EUROPEEN**

(43) Date de publication:
**14.01.2009 Bulletin 2009/03**

(51) Int Cl.:
***G01S 1/00*** (2006.01)

(21) Numéro de dépôt: **08160151.0**

(22) Date de dépôt: **10.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **12.07.2007 FR 0705056**

(71) Demandeur: **Thales**
**92200 Neuilly sur Seine (FR)**

(72) Inventeurs:
• **Martin, Nicolas**
  **26500 Bourg les Valence (FR)**
• **Guichon, Hervé**
  **07500 Guilheran (FR)**
• **Revol, Marc**
  **26120 Upic (FR)**

(74) Mandataire: **Chaverneff, Vladimir et al**
**Marks & Clerk France**
**Conseils en Propriété Industrielle**
**Immeuble " Visium "**
**22, avenue Aristide Briand**
**94117 Arcueil Cedex (FR)**

(54) **Procédé de correction à la réception dans un mobile de défauts affectant à l'émission de signaux de radionavigation à porteuse à double décalage de phase**

(57) La présente invention a pour objet un procédé de correction à la réception de défauts affectant à l'émission de signaux de radionavigation à porteuse à double décalage de phase, permettant d'effectuer de façon simple et sûre cette correction. Le procédé de l'invention est caractérisé en ce qu'on démodule chaque composante du signal reçu par un procédé de démodulation BPSK classique, que l'on compense le différentiel de phase des deux signaux, source par source, et que l'on procède à une poursuite cohérente en sommant les sorties complexes du traitement de démodulation.

FIG.4

Printed by Jouve, 75001 PARIS (FR)

**Description**

La présente invention se rapporte à un procédé de correction à la réception dans un mobile de défauts affectant à l'émission de signaux de radionavigation à porteuse à double décalage de phase, signaux provenant de plusieurs sources à position de référence.

La radionavigation par satellite permet d'obtenir la position du récepteur par une résolution voisine de celle de la triangulation, en utilisant les pseudo-distances mesurées à partir des signaux envoyés par les satellites.

Certains systèmes de navigation utilisent des signaux à porteuse à double décalage de phase constitués d'une porteuse en RF (dite « porteuse centrale »), modulée à la fois par une sous-porteuse carrée et un code d'étalement. Cette modulation présente un spectre à deux lobes principaux et une fonction d'autocorrélation avec des pics multiples.

Le but de cette modulation est double :

- libérer le spectre entre les deux lobes pour d'autres signaux déjà existants,
- améliorer la précision des mesure en présence de bruit thermique et de multi-trajets.

L'inconvénient de cette modulation est que pour démoduler correctement le signal, il faut trouver le pic principal de la fonction d'autocorrélation (par un procédé de lever d'ambiguïté), afin d'avoir le maximum d'énergie et de fournir des mesures cohérentes entre les satellites, avec le risque de se tromper et de fournir une mesure de pseudo-distance biaisée.

Plusieurs techniques existent pour réaliser ce lever d'ambiguïté. Elles commencent toutes par une recherche d'énergie dans un domaine d'incertitude temps/ fréquence. Le lever d'ambiguïté peut commencer une fois que de l'énergie a été trouvée.

La technique « Bump Jumping » commence par démoduler et poursuivre le signal à porteuse à double décalage de phase sur n'importe quel pic, puis à chercher de proche en proche un pic plus puissant, jusqu'à un trouver un pic présentant un maximum d'énergie.

La technique « BPSK like » consiste à démoduler en parallèle chaque lobe du signal reçu comme s'il s'agissait d'un signal classique BPSK, sans sous-porteuse locale, chacun de ces lobes ayant une porteuse décalée à gauche ou à droite, et à déterminer le maximum de l'enveloppe (dans ce mode, la fonction d'autocorrélation correspond à l'enveloppe de la fonction d'autocorrélation du signal à porteuse à double décalage de phase), qui doit correspondre au pic principal. Une fois que la boucle de code a convergé sur le maximum de l'enveloppe, le récepteur repasse en démodulation avec un code local et une sous-porteuse locale et se retrouve ainsi asservi sur le pic principal. La démodulation « BPSK like » présente une fonction d'autocorrélation non ambiguë, mais offre moins de précision.

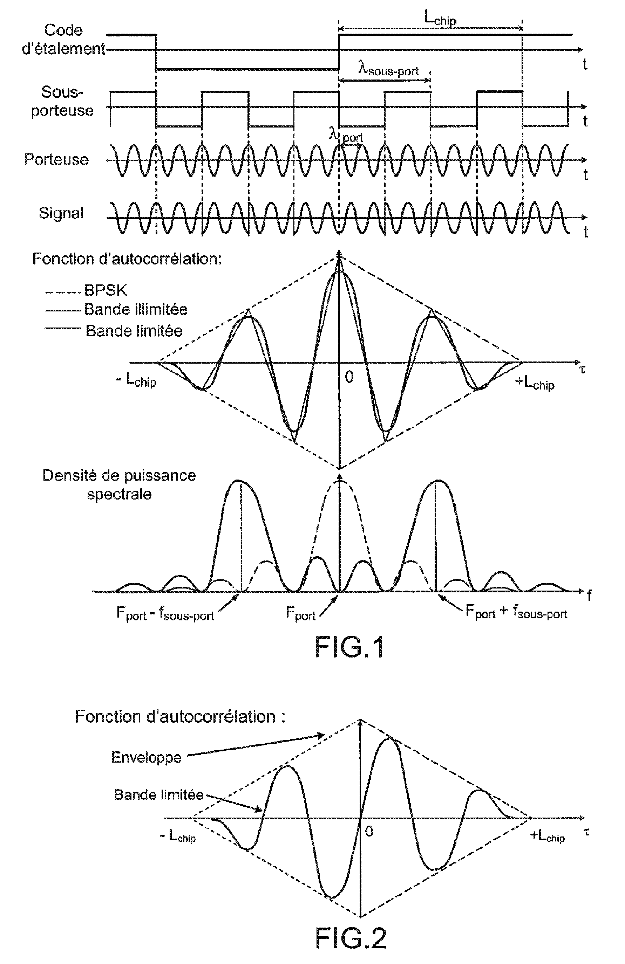

On a représenté sur la figure 1, de haut en bas, les diagrammes d'évolution dans le temps des différentes composantes d'un signal de radionavigation sans défauts à porteuse à double décalage de phase, à savoir : son code d'étalement, la sous-porteuse rectangulaire, la porteuse, puis la porteuse ainsi modulée, et la fonction d'autocorrélation, et enfin la répartition en fréquence de la densité spectrale du signal modulé.

Lorsque le signal possède la forme idéale, parfaitement symétrique, comme c'est le cas pour la figure 1, la fonction d'autocorrélation présente toujours un pic principal prépondérant au centre et des pics secondaires de part et d'autre d'amplitude moindre. Dans ce cas, il est relativement aisé, en comparant les amplitudes ou en exploitant l'enveloppe de cette fonction, de déterminer avec une grande confiance le pic principal.

Cependant, lorsque le signal est déformé par les voies analogiques (fonctions de tranfert non idéales sur l'antenne, les filtres, les amplificateurs et les multiplicateurs de changement de fréquence analogiques) au sein du récepteur, il est possible d'obtenir une fonction d'autocorrélation non symétrique, voire antisymétrique avec deux pics principaux de part et d'autre du centre, de signes contraires, comme représenté en figure 2. Dans ce cas, il est difficile, voire impossible, de faire le choix sur un critère de maximum d'amplitude. En outre, on perd de l'énergie par rapport au cas symétrique.

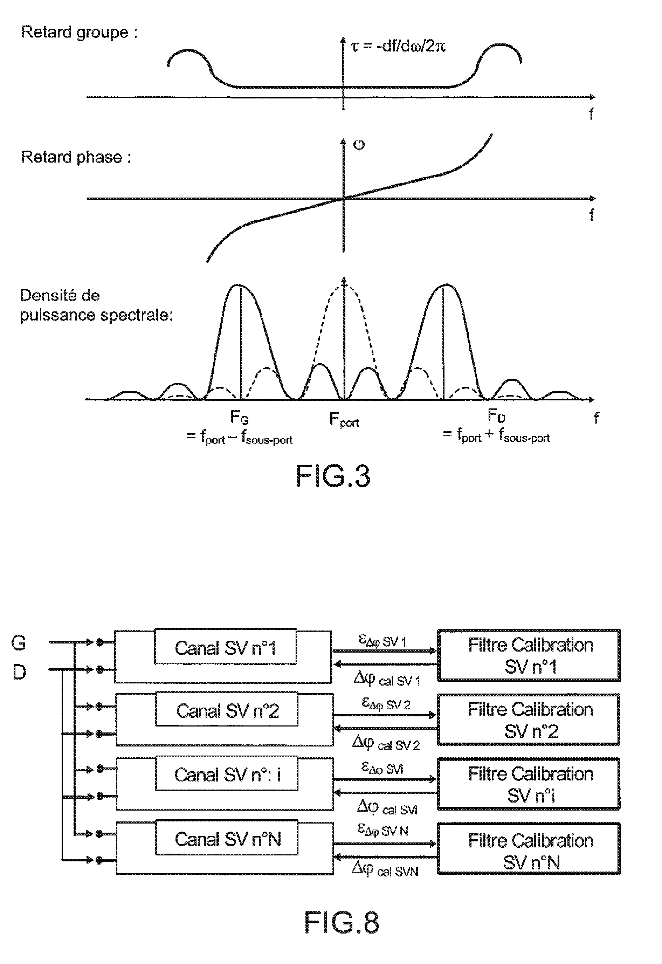

Ce phénomène est du à une incohérence entre le déphasage relatif des deux lobes d'un côté et le retard de groupe moyen sur les deux lobes de l'autre. Cette incohérence est due à un retard de groupe non constant dans la bande passante (ou autrement dit un retard de phase non linéaire en fréquence). On appelle ce défaut « différentiel de phase ».Un exemple de ce phénomène a été représenté en figure 3. Sur cette figure, on a représenté, de haut en bas, les évolutions, en fonction de la fréquence, du retard de groupe, du retard de phase et de la répartition spectrale de l'énergie du signal présentant ces défauts. Les mêmes phénomènes se produisent lorsque des défauts affectent les signaux émis par un satellite.

La présente invention a pour objet un procédé de correction à la réception dans un mobile de défauts affectant à l'émission de signaux de radionavigation à porteuse à double décalage de phase, signaux provenant de plusieurs sources à position de référence, permettant d'effectuer de façon simple et sûre cette correction.

Le procédé conforme à l'invention est un procédé de correction à la réception dans un mobile de défauts affectant à l'émission de signaux de navigation à porteuse à double décalage de phase émis par au moins deux sources différentes, signaux provenant de plusieurs sources à position de référence, et il caractérisé en ce qu'on démodule chaque composante du signal reçu par un procédé de démodulation BPSK classique, que l'on compense le différentiel de phase des deux signaux, source par source, et que l'on procède à une poursuite cohérente en sommant les sorties complexes du traitement de démodulation.

Selon une autre caractéristique de l'invention, le lever d'ambiguïté entre deux lobes d'amplitudes voisines est réalisé par verrouillage de code en « BPSK-like » sur ces deux lobes concurremment avec un verrouillage de phase sur la porteuse centrale.

Selon encore une autre caractéristique de l'invention, la correction des différentiels de phase dus aux sources est réalisée à la réception dans le mobile pour chaque source par une correction différentielle sur la phase des porteuse locales.

Selon encore une autre caractéristique de l'invention, la correction des différentiels de phase dus aux sources est réalisée à la réception dans le mobile pour chaque source par une rotation complexe différentielle sur les sorties des corrélateurs complexes.

Selon encore une autre caractéristique de l'invention, on compense le différentiel de retard de groupe à la réception dans le mobile pour chaque source, par une correction différentielle sur la phase des codes locaux.

Selon encore une autre caractéristique de l'invention, l'identification des défauts des sources est réalisée par le récepteur du mobile lui même.

Selon encore une autre caractéristique de l'invention, l'identification des défauts dus aux sources est réalisée au sol, pour chaque source dans au moins une station fixe recevant les corrections réalisées dans les récepteurs des différentes stations au sol en communication avec cette station, les différentes corrections ainsi reçues étant moyennées, filtrées et transmises au mobile.

Selon encore une autre caractéristique de l'invention, la moyenne des corrections entre les stations sol est effectuée globalement pour l'ensemble des sources grâce à un filtre aux moindres carrés en introduisant des inconnues supplémentaires que sont les biais propres aux récepteurs au sol.

Selon encore une autre caractéristique de l'invention, chaque canal de réception de source utilise un seul intégrateur de phase de code local.

Selon encore une autre caractéristique de l'invention, chaque canal de réception de source utilise un seul générateur de code local.

Selon encore une autre caractéristique de l'invention, chaque canal de réception de source utilise deux lignes à retard cadencées dont une paramétrique pour produire deux codes locaux à partir du code produit par le générateur de code.

Selon encore une autre caractéristique de l'invention, chaque canal de réception de source utilise un seul intégrateur de phase de porteuse locale, et en sortie de l'intégrateur, la phase du code local est ajoutée et soustraite à la phase de porteuse locale pour produire les phases des deux porteuses locales servant à démoduler les deux composantes du signal reçu.

La présente invention sera mieux comprise à la lecture de la description détaillée d'un mode de réalisation, pris à titre d'exemple non limitatif et illustré par le dessin annexé, sur lequel :

- la figure 1 est un ensemble de diagrammes de signaux sans défauts reçus d'un satellite de radionavigation du type à porteuse à double décalage de phase,
- les figures 2 et 3 sont des diagrammes de signaux du type de ceux de la figure 1, mais affectés de défauts,
- les figures 4 à 6 sont des blocs-diagrammes de trois modes de réalisation d'un récepteur de radionavigation mettant en oeuvre le procédé de l'invention,
- la figure 7 est un bloc-diagramme d'un exemple de réalisation d'une ligne à retard cadencée paramétrique telle que pouvant être utilisé par l'invention pour la correction du différentiel de retard,
- la figure 8 est un bloc-diagramme d'un filtre de calibration pouvant être utilisé pour la mise en oeuvre du procédé de l'invention, et
- la figure 9 est un exemple de réalisation d'un circuit correcteur de phase pouvant être utilisé par l'invention.

L'invention est décrite ci-dessous en référence à des signaux de radionavigation provenant de satellites, mais il est bien entendu qu'elle n'est pas limitée à cette seule application et qu'elle peut également être mise en oeuvre lorsque ces signaux proviennent d'émetteurs fixes (« pseudolites », qui est une contraction de « pseudo-satellite », c'est-à-dire des émetteurs terrestres émettant des signaux semblables à ceux des satellites) ou mobiles (aéronef, véhicule terrestre, navire, etc.). En outre, le mobile comportant le récepteur de radionavigation peut aussi bien être un aéronef qu'un véhicule terrestre ou un navire.

Une caractéristique importante de l'invention est que l'on combine deux méthodes complémentaires de poursuite d'un signal à deux composantes telles que décrites séparément dans les brevets français 2 841 069 (poursuite cohérente des deux composantes) et 2 892 202 (compensation des défauts analogiques), les contenus de ces deux brevets faisant partie de la présente description.

La première méthode connue consiste à démoduler indépendamment les deux composantes assimilées à des signaux BPSK et à réaliser une poursuite cohérente des deux composantes, avec une seule boucle de code et une seule boucle de porteuse, de manière à obtenir les même performances qu'avec un traitement de signal à porteuse à double décalage de phase qui utiliserait une sous-porteuse locale. Pour chaque signal reçu, la démodulation des deux composantes est faite à l'aide de moyens matériels comprenant deux canaux distincts. La poursuite cohérente est faite par logiciel (post-corrélation).

La deuxième méthode connue consiste à compenser les défauts dus à la partie analogique du récepteur (en particulier lorsque les voies analogiques sont distinctes) après identification de ces défauts grâce aux signaux satellites eux mêmes.

Dans le cas de l'application à un signal à porteuse à double décalage de phase, le signal à deux lobes est assimilé à un signal à deux composantes BPSK avec un code identique, mais deux porteuses distinctes (mais avec une relation déterministe et comme entre les phases à l'émission, avant les défauts dus à la partie analogique). On a un seul code local, un seul intégrateur numérique de phase (en anglais NCO : Numerically Controlled Oscillator) pour la phase du code local , un seul intégrateur numérique de phase pour la phase de la porteuse centrale locale, et des voies de corrélation distinctes entre les deux lobes. On utilise la méthode de compensation par produit complexe pour corriger à la sortie des corrélateurs le défaut de différentiel de phase entre les deux voies. Ainsi, on retrouve une fonction de corrélation ambiguë mais symétrique avec un pic principal en son centre.

Si le défaut provient des satellites, l'amplitude de la compensation à appliquer pour le signal provenant de chaque satellite pourra être identifiée par une station au sol et fournie au récepteur via le message de navigation. L'identification par la station au sol pourra être effectuée par des récepteurs sol, selon le procédé de calibration décrit dans la deuxième méthode connue citée ci-dessus, en mettant en oeuvre un filtre de calibration pour chaque satellite poursuivi, conformément au schéma de la figure 8. Il est aussi possible que le récepteur identifie les défauts de chaque satellite dans une phase préalable, à supposer que ce défaut n'évolue pas sensiblement par la suite.

Pour exposer les caractéristiques de l'invention, on va décrire d'abord son étape de poursuite cohérente avec compensation des défauts. A cet effet, on applique la méthode de poursuite cohérente telle que décrite dans le brevet français 2 892 202 précité, avec les simplifications suivantes pour les moyens mis en oeuvre:

- un seul canal avec deux voies de corrélation pour les lobes Gauche et Droit
- un seul intégrateur numérique de phase de porteuse locale
- un seul intégrateur numérique de phase de code local
- un seul générateur de code
- les phases de porteuses sont obtenues par combinaison des phases de porteuse centrale et de code
- pas de compensation des différentiels de retard de groupe (Si on suppose que le différentiel de retard entre les deux lobes est négligeable car on a une seule voie analogique pour le signal à porteuse à double décalage de phase et qu'il n'y a donc pas lieu de le corriger).

En outre, selon l'invention, la compensation du différentiel de phase est effectuée en tenant compte de la correction $\Delta\varphi_{cal}$ produite par le filtre de calibration, qui compense les défauts du récepteur, correction commune à tous les satellites, et des corrections $\Delta\varphi_{SV\,i}$ propres à chaque satellite. Ces dernières corrections peuvent être fournies soit par la station au sol via le message de navigation, soit identifiées sur chaque satellite avant de passer en poursuite cohérente.

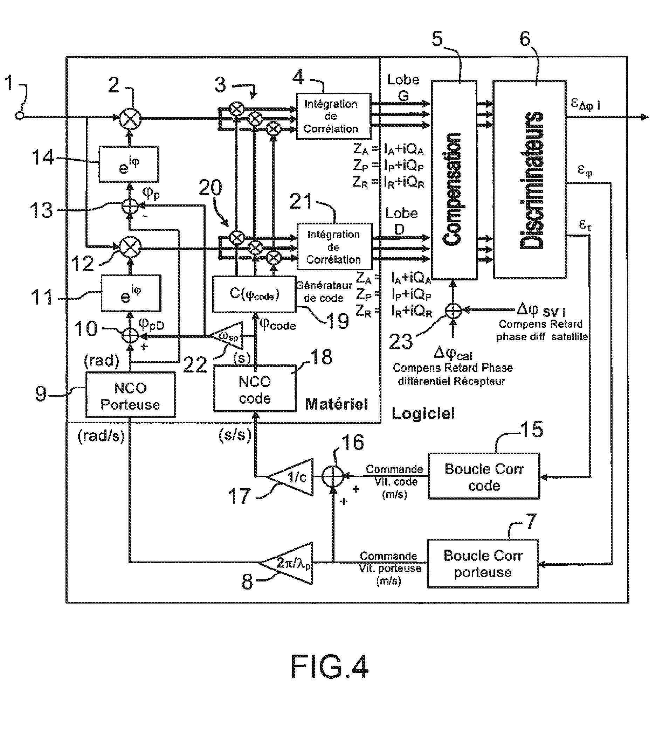

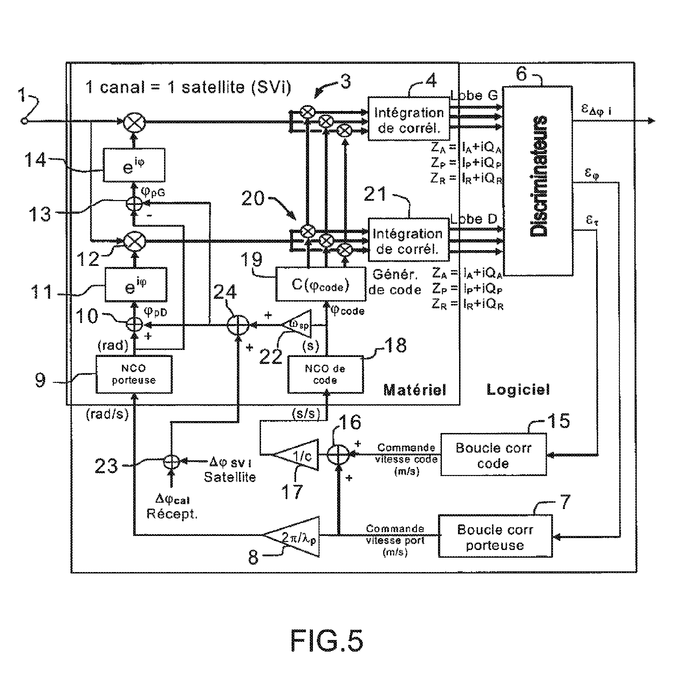

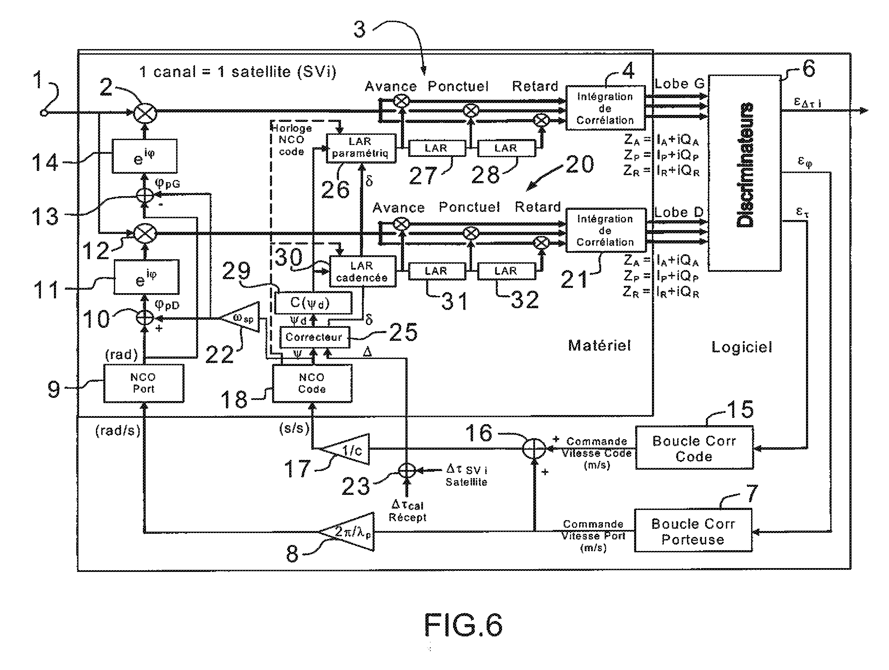

On a représenté en figure 4 le bloc-diagramme d'un exemple de canal de réception (à raison d'un canal par satellite reçu, ce qui est également valable pour les dispositifs des figures 5 et 6) d'un récepteur de signaux GNSS pour la mise en oeuvre du procédé de l'invention en vue de traiter des signaux « à porteuse à double décalage de phase » reçus de satellites, avec correction des différentiels de phases locales après corrélation. Une grande partie des éléments de cette figure ayant été décrite dans le susdit brevet français 2 892 202, on ne les décrit que brièvement ci-dessous.

Ce dispositif de la figure 4 reçoit un signal 1 provenant de satellites de radionavigation. Ce signal 1 passe par un premier multiplieur 2 dont la sortie est reliée à un ensemble 3 de trois multiplieurs de corrélation mis en parallèle, dont les sorties sont reliées à un circuit 4 d'intégration de corrélation. Les sorties de ce circuit 4 sont traitées de façon logicielle par un compensateur 5 suivi d'un ensemble de discriminateurs 6, cet ensemble comportant au moins trois discriminateurs, pour la boucle de poursuite de la porteuse, pour la boucle de poursuite du code et pour le filtre de calibration du différentiel de phase. La fonction 6 produit trois sortes de signaux à ses sorties : un signal $\varepsilon_{\Delta\varphi}$ d'estimation de l'erreur de compensation du différentiel de phase, un signal $\varepsilon_\varphi$ d'estimation de l'erreur sur la phase de la porteuse centrale locale (exprimée en radians) et un signal $\varepsilon_\tau$ d'estimation de l'erreur sur la phase du code local (exprimée en secondes). Ces deux derniers signaux sont respectivement utilisés par une boucle de poursuite de phase de porteuse et par une boucle de poursuite de code.

La boucle de poursuite de phase de porteuse comporte d'abord les fonctions logicielles suivantes: un correcteur de phase de porteuse 7 suivi d'un amplificateur 8 apportant une amplification de $2\pi/\lambda_p$ ($\lambda_p$ étant la longueur d'onde de la porteuse centrale) de commande de vitesse de porteuse. Le signal ainsi amplifié est envoyé à des circuits matériels comportant respectivement : un intégrateur numérique de phase de porteuse 9 (NCO), un additionneur 10, un générateur de porteuse locale 11 et un multiplieur 12 recevant d'autre part le signal 1. La sortie de l'intégrateur 9 est reliée à un additionneur 13 suivi d'un autre générateur de porteuse locale 14, dont la sortie est reliée au multiplieur 2.

La boucle de poursuite de code comporte d'abord les fonctions logicielles suivantes: un correcteur de phase de code 15, un additionneur 16 (recevant d'autre part le signal du correcteur 7) suivi d'un amplificateur 17 apportant une amplification de 1/c. Le signal ainsi amplifié est envoyé à des circuits matériels comportant respectivement : un intégrateur numérique de phase de code 18, un générateur de codes locaux (avance, ponctuel, retard) 19, un ensemble 20 de trois multiplieurs de corrélation de code, dont les entrées sont reliées d'autre part au multiplieur 12. Leurs sorties sont reliées à un circuit 21 d'intégration de corrélation et aux entrées des multiplieurs 3 correspondants. D'autre part, la sortie de l'intégrateur 18 est reliée via un amplificateur 22 à l'additionneur 10 et à l'additionneur 13.

Le compensateur 5 reçoit d'un additionneur 23 la somme du signal $\Delta\varphi_{SV\,i}$ de compensation du différentiel de phase dû aux satellites à portée du récepteur, (ce signal étant produit par au moins une station au sol), et du signal $\Delta\varphi_{cal}$ de compensation du différentiel de phase dû au récepteur et produit par le filtre de calibration du récepteur tel que décrit dans le susdit brevet français 2 892 202.

On a représenté en figure 5 une variante du dispositif de la figure 4, le circuit de la figure 5 se distinguant en particulier par le fait qu'il réalise la correction des différentiels de phases locales avant corrélation. De ce fait, ce dispositif ne comporte pas la fonction de compensation 5 du dispositif de la figure 4. Sur la figure 5, les mêmes éléments que ceux de la figure 4 sont affectés des mêmes références numériques. Les parties logicielle et matérielle des boucles de correction de porteuse et de code sont les mêmes qu'en figure 4. La différence par rapport au dispositif de la figure 4 réside dans le fait que la sortie de l'additionneur logiciel 23 est relié à une entrée d'un additionneur matériel 24 inséré entre la sortie de l'amplificateur 22 et les entrées des additionneurs 10 et 13.

Dans les dispositifs des figures 4 et 5, les signaux complexes produits par les circuits 4 et 21 d'intégration de corrélation pour les lobes gauche et droit précités, sont respectivement les suivants (pour les voies avance ZA, ponctuelle ZP et retard ZR):

$$Z_{A\,a\,i\,compensé} = e^{+j\Delta\varphi\,cal} . Z_{A\,a\,i} \qquad Z_{A\,b\,i\,compensé} = e^{-j\Delta\varphi\,cal} . Z_{A\,b\,i}$$

$$Z_{P\,a\,i\,compensé} = e^{+j\Delta\varphi\,cal} . Z_{P\,a\,i} \qquad Z_{P\,b\,i\,compensé} = e^{-j\Delta\varphi\,cal} . Z_{P\,b\,i}$$

$$Z_{R\,a\,i\,compensé} = e^{+j\Delta\varphi\,cal} . Z_{R\,a\,i} \qquad Z_{R\,b\,i\,compensé} = e^{-j\Delta\varphi\,cal} . Z_{R\,b\,i}$$

Le dispositif représenté en figure 6 se rapporte à la correction du différentiel de retard de groupe, le principe de cette correction étant similaire à celui de la correction des différentiels de phase du dispositif de la figure 5. En particulier, ce dispositif ne comporte qu'un seul intégrateur numérique de phase (NCO) et un seul générateur de code dans la boucle de poursuite de code. Les mêmes éléments que ceux de la figure 5 sont affectés des mêmes références numériques.

Dans le dispositif de la figure 6, la boucle de correction de porteuse est la même que dans le dispositif de la figure 5. Par contre, la boucle de poursuite de code en diffère dans sa partie matérielle. Dans cette partie matérielle, la sortie de l'intégrateur 18 ($\psi$) est reliée via un circuit correcteur 25 spécifique à la correction du différentiel de retard de groupe, dont la sortie d'élaboration de paramètre ($\delta$) est reliée à l'entrée de paramètre d'une ligne à retard paramétrique cadencée 26 (cadencée par le signal d'horloge $H_{code}$ mentionné ci-dessous) suivie de deux lignes à retard classiques 27, 28. Les sorties des lignes à retard 26, 27 et 28 sont respectivement reliées chacune à une entrée des multiplieurs « avance », « ponctuel » et retard » de l'ensemble de multiplieurs 3. La ligne à retard paramétrique cadencée 26 permet de décaler le code de la voie Gauche par rapport à celui de la voie Droite, avec un décalage dépendant la valeur de la correction de retard de groupe.

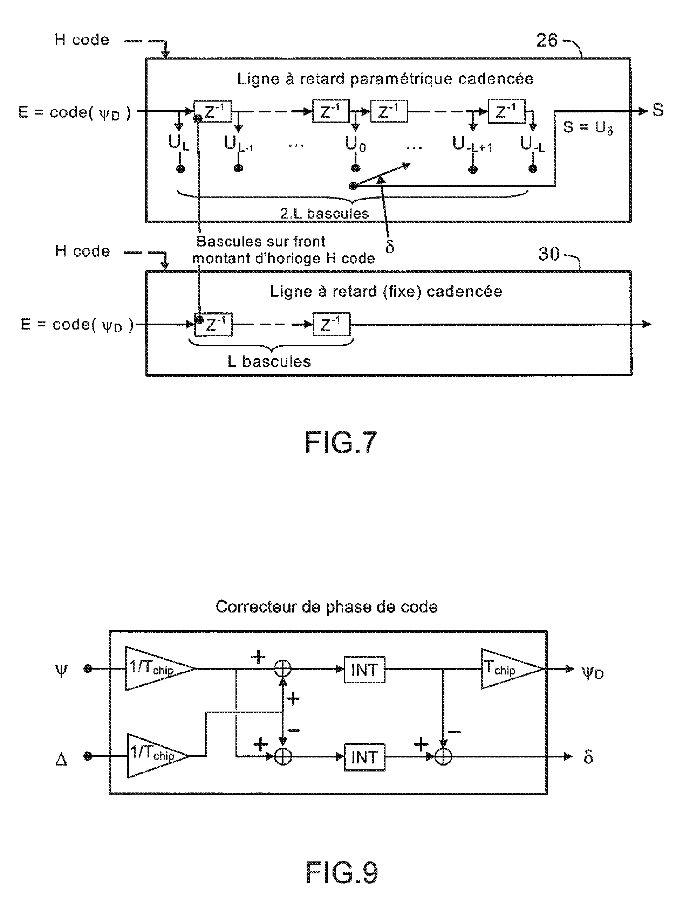

Le circuit 25 est réalisé de façon connue en soi (voir un exemple de réalisation en figure 9), en tenant compte des impératifs suivants. On veut générer deux codes, un pour démoduler le lobe gauche et un autre pour démoduler le lobe droit, à partir de $\psi_G$ et $\psi_D$. On veut avoir $\psi_D$ = partie entière[ ($\psi + \Delta$) / $T_{chip}$ ] x $T_{chip}$ et $\psi_G$ = partie entière[ ( $\psi - \Delta$) / $T_{chip}$ ] x $T_{chip}$. Comme on veut éviter d'avoir deux générateurs de code, on produit le code du lobe gauche à partir du code du lobe droit (généré à partir de $\psi_D$) en l'avançant d'un nombre entier de chips égal à ( $\psi_G - \psi_D$) /$T_{chip}$ = $\delta$. Comme on ne sait pas avancer un signal, on retarde le code du lobe droit d'un nombre entier de chips constant L égal à la valeur maximale de δ grâce à une ligne à retard cadencée par Hcode et on retarde le code du lobe gauche d'un nombre entier de chips variable L - δ grâce à une ligne à retard paramétrique cadencée par Hcode. Le retard de L chips de code commun aux deux lobes n'a pas de conséquence sur les performances du traitement du signal.

La sortie $\psi_d$ du circuit correcteur 25 est la phase de code local en entrée du générateur de code 29 qui produit un code local en entrée de la ligne à retard paramétré cadencée 26, et en entrée de la ligne à retard cadencée 30 (cadencée par le signal d'horloge $H_{code}$ mentionné ci-dessous). Cette ligne à retard 30 est suivie de deux lignes à retard classiques 31 et 32. Les sorties des lignes à retard 30, 31 et 32 sont respectivement reliées chacune à une entrée des multiplieurs « avance », « ponctuel » et retard » de l'ensemble de multiplieurs 20. En outre, la sortie de signal d'horloge de code ($H_{code}$) de l'intégrateur de phase de code 18 est reliée aux entrées de signal d'horloge des lignes à retard cadencée 26 et 30. Le correcteur 25 reçoit en outre le signal (Δ) de l'additionneur 23. Ce signal H code est un signal numérique ayant un front montant chaque fois que la partie entière de la phase ψ en sortie de l'intégrateur 18 augmente de 1. Les différentes variables relatives au correcteur de phase de code sont telles que :

$$\psi_D = \text{partie entière}[\,(\,\psi + \Delta\,)\,/\,T_{chip}\,]\;x\;T_{chip}$$

$$\delta\;=\;\text{partie entière}[\,(\,\psi - \Delta\,)\,/\,T_{chip}\,]\;,\;\text{soit}:$$

$$\delta\;=\;\text{partie entière}[\,(\,\psi - \Delta\,\,)\,/\,T_{chip}\,]\,-\,\psi_D\,/\,T_{chip}$$

$T_{chip}$ étant la durée d'un créneau du code d'étalement.

On a représenté en figure 7 un exemple de réalisation de la ligne à retard 26 et de la ligne à retard 30. La ligne à retard 26 comporte plusieurs bascules représentées par le symbole $Z^{-1}$ (dont le nombre 2L est égal au nombre maximal de retards unitaires à obtenir) en cascade. Ces bascules sont des bascules bistables basculant à chaque front montant du signal d'horloge $H_{code}$. La ligne à retard 26 reçoit en entrée le code local relatif au satellite concerné, produit par le générateur de code 29. En sortie de cette ligne à retard paramétrique on retrouve le code local retardé de L+δ périodes de créneaux du code par les L+δ premières bascules successives.

La ligne à retard 30 comporte L bascules bistables en cascade, mais comme elle n'est pas de type paramétrique, seule la sortie de la dernière bascule constitue la sortie de la ligne à retard. Son signal d'entrée est le même que celui de la bascule 26, comme mentionné ci-dessus. En sortie de cette ligne à retard, on retrouve le code local retardé de L périodes de créneaux du code par les L bascules successives.

On a représenté en figure 8 le bloc-diagramme d'un exemple de dispositif de détermination des différentiels de retard différentiel de propagation $\Delta\tau_{cal}$ et de retard différentiel de phase $\Delta\varphi_{cal}$ du récepteur de positionnement pour chaque satellite reçu. Les N paires de lobes reçus de N satellites, à savoir les lobes gauche et droit, sont appliqués à N canaux de réception bi-fréquences R1, R2,...Ri .. RN de même type que l'un de ceux décrits en référence aux figures 4 à 6. Chaque canal récepteur bi-fréquences fournit à un filtre de calibration qui lui est propre (SVn°1 à SVn°N) les valeurs estimées de l'erreur de correction (ou calibration) du différentiel de phase $\varepsilon_{\Delta\varphi\,SVi}$ (avec i =1 à N) pour calculer la correction de différentiel de phase $\Delta\varphi_{cal\,SVi}$ qui est appliquée à l'additionneurs 23 du canal i. De même, si besoin, chaque canal récepteur bi-fréquences fournit à un filtre de calibration qui lui est propre (SVn°1 à SVn°N) les valeurs estimées de l'erreur de correction (ou calibration) du différentiel de retard $\Delta\tau_{cal\,SVi}$ (avec i =1 à N) pour calculer la correction de différentiel de retard $\Delta\tau_{cal\,SVi}$ qui est appliquée à l'autre additionneurs 23 du canal i.

Le rôle des filtres est de filtrer dans le temps les mesures reçues des satellites pour remettre à jour les corrections $\Delta\varphi_{cal\,SVi}$ et $\Delta\tau_{cal\,SVi}$, en minimisant l'impact des erreurs de mesure sur la précision de la calibration.

Pour ce qui est du lever d'ambiguïté en vue de déterminer le pic principal de la fonction d'autocorrélation, la phase de recherche d'énergie est faite classiquement par la méthode « BPSK like » sur un lobe ou deux lobes (sommation non-cohérente des énergies).

La phase de transition commence une fois que le récepteur a trouvé de l'énergie et permet de passer en poursuite de signal à porteuse à double décalage de phase nominale verrouillée sur le pic principal. Elle inclut une première phase de convergence en Doppler grâce à une boucle de fréquence, et une deuxième phase de lever d'ambiguïté du signal à porteuse à double décalage de phase grâce à une boucle de code en « BPSK like» sur les deux lobes, aidée par une boucle de phase de porteuse verrouillée sur la porteuse centrale.

Le lever d'ambiguïté proprement dit utilise par exemple la méthode décrite dans le document : « ION GPS/ GNSS 2003, 9-12 Septembre 2003, Portland, OR » - Pages 188 à 198, Auteurs : N. MARTIN, V. LEBLOND, G. GUILLOTEL, V. HEIRIES

L'identification des défauts des satellites peut être réalisée par le récepteur utilisateur lui même, en utilisant la méthode décrite dans le brevet cité précédemment (n° 2 892 202) mais avec un filtre de calibration du différentiel de phase et un filtre de calibration du différentiel de retard pour chaque satellite, comme dans la figure 8. Afin d'être le moins sensible aux perturbations locales (bruit thermique, interférences, multi-trajet) il convient d'avoir un horizon (ou période) de filtrage le plus long possible (compatible avec les évolutions des défauts des satellites dans le temps) et de sauvegarder les valeurs des corrections entre deux utilisations du récepteur. Un filtre de Kalman constitue une solution adéquate.

Chaque filtre de calibration (voir figure 8) produit une correction $\Delta\varphi_{SV\,i}$ pour le satellite SV n°i à partir d'un discriminateur de différentiel de phase $\varepsilon_{\Delta\varphi\,i}$. On n'a plus de correction commune $\Delta\varphi_{cal}$, car elle est déjà incluse dans $\Delta\varphi_{SV}\,i$. De même pour le différentiel de retard, si besoin.

Il est cependant préférable d'identifier les défauts au sol grâce à des récepteurs fixes qui moyennent les erreurs de calibration dans l'espace et dans le temps : Pour chaque satellite i de la constellation les corrections de différentiel de phase $\Delta\varphi_{SVi}$ et de différentiel de retard $\Delta\tau_{SVi}$, relatives au satellite i et estimées par tous les récepteurs sol en visibilité du satellite i, sont moyennées, filtrées et transmises au récepteur utilisateur mobile par le message de navigation. Dans ce cas le récepteur mobile met en oeuvre la méthode de calibration telle que décrite dans le susdit brevet français 2 892 202, mais en ajoutant dans chaque canal satellite i, via les additionneurs 23 des figures 4, 5 et 6, respectivement les corrections $\Delta\varphi_{SVi}$ et $\Delta\tau_{SVi}$ aux corrections $\Delta\varphi_{cal}$ et $\Delta\tau_{cal}$ estimées dans le récepteur mobile par le filtre de calibration de différentiel de phase et le filtre de calibration du différentiel de retard. Chaque récepteur RX j au sol met en oeuvre la méthode décrite dans le susdit brevet français 2 892 202, mais avec un filtre de calibration par satellite SV i visible, comme décrit dans la figure 8, afin de produire une estimée du différentiel de phase $\Delta\varphi_{SVi\,RXj}$ et du différentiel de retard $\Delta\tau_{SVi\,RXj}$.

Afin de tenir compte des défaut des voies analogiques propres aux récepteurs au sol et qui sont de nature à biaiser les estimations $\Delta\varphi_{SVi\,RXj}$ et $\Delta\tau_{SVi\,RXj}$ il est judicieux d'effectuer la moyenne des corrections estimés grâce à une filtre moindre carré en introduisant des inconnues supplémentaires que sont le biais des récepteurs $\Delta\varphi_{RXj}$.

Récepteur sol n° 1 :

$$\begin{cases} \Delta\varphi_{SV1} + \Delta\varphi_{RX1} = \Delta\varphi_{SV1\,RX1} \\ \Delta\varphi_{SV2} + \Delta\varphi_{RX1} = \Delta\varphi_{SV2\,RX1} \\ \quad\quad\quad \vdots \\ \Delta\varphi_{SVN} + \Delta\varphi_{RX1} = \Delta\varphi_{SVN\,RX1} \end{cases}$$

Récepteur sol n° 2 :

$$\begin{cases} \Delta\varphi_{SV1} + \Delta\varphi_{RX2} = \Delta\varphi_{SV1\,RX2} \\ \Delta\varphi_{SV2} + \Delta\varphi_{RX2} = \Delta\varphi_{SV2\,RX2} \\ \quad\quad\quad \vdots \\ \Delta\varphi_{SVN} + \Delta\varphi_{RX2} = \Delta\varphi_{SVN\,RX2} \end{cases}$$

$$\vdots$$

Récepteur sol n° M :

$$\begin{cases} \Delta\varphi_{SV1} + \Delta\varphi_{RXM} = \Delta\varphi_{SV1\,RXM} \\ \Delta\varphi_{SV2} + \Delta\varphi_{RXM} = \Delta\varphi_{SV2\,RXM} \\ \qquad\qquad : \\ \Delta\varphi_{SVN} + \Delta\varphi_{RXM} = \Delta\varphi_{SVN\,RXM} \end{cases}$$

Inconnues:

$\Delta\varphi_{SVi}$, i = 1, 2, .. N (Correction du différentiel de phase produit par le segment sol pour le satellite n° i et transmis aux récepteurs utilisateurs)

$\Delta\varphi_{RXj}$ j = 1, 2,.. M (Différentiel de phase propre au récepteur sol n°j)

Mesures :

$\Delta\varphi_{SVi\,RXj}$, i = 1, 2, .. N et j = 1, 2,.. M (Différentiel de phase estimé par le récepteur n°j sur le satellite n°i)

On écrit le système sous la forme :

$$H \cdot X = Z$$

$$X = [\, \Delta\varphi_{SV1}, \Delta\varphi_{SV2}, .., \Delta\varphi_{SVN}\ ,\ \Delta\varphi_{RX1}, \Delta\varphi_{RX2}, .., \Delta\varphi_{RXM}\,]^{T}$$

$$Z = [\, \Delta\varphi_{SV1\,RX1}, \Delta\varphi_{SV2\,RX1}, .., \Delta\varphi_{SVN\,RX1}\ ,\ \Delta\varphi_{SV1\,RX2}, .., \Delta\varphi_{SVN\,RXM}\,]^{T}$$

$$\text{Solution aux moindres carrés : } X = (H \cdot H^{T})^{-1} \cdot H^{T} \cdot Z$$

(Bien entendu cette méthode s'applique de la même manière au différentiel de retard $\Delta\tau$)

On a N + M inconnues et autant d'équations par récepteur sol que de satellites visibles, sachant que l'on a en moyenne un tiers des satellites de la constellation qui sont visibles de chaque récepteur sol. Comme il faut plus d'équations que d'inconnues, une demi-douzaine de stations sol réparties sur toute la Terre devrait suffire à identifier tous les corrections de tous les satellites de la constellation. Les récepteurs sol supplémentaires sont utiles pour améliorer la précision des corrections.

**Revendications**

1. Procédé de correction à la réception dans un mobile de défauts affectant à l'émission de signaux de radionavigation à porteuse à double décalage de phase, signaux provenant de plusieurs sources à position de référence, **caractérisé en ce qu'**on démodule chaque composante du signal reçu par un procédé de démodulation BPSK classique, que l'on compense le différentiel de phase des deux signaux, source par source, et que l'on procède à une poursuite cohérente en sommant les sorties complexes du traitement de démodulation.

2. Procédé selon la revendication 1, **caractérisé en ce que** le lever d'ambiguïté entre deux lobes d'amplitudes voisines est réalisé par verrouillage de code en « BPSK-like » sur ces deux lobes concurremment avec un verrouillage de phase sur la porteuse centrale.

3. Procédé selon la revendication 1 ou 2, **caractérisé en ce que** la correction des différentiels de phase dus aux sources est réalisée à la réception dans le mobile pour chaque source par une correction différentielle sur la phase des porteuse locales.

4. Procédé selon la revendication 1 ou 2, **caractérisé en ce que** la correction des différentiels de phase dus aux sources est réalisée à la réception dans le mobile pour chaque source par une rotation complexe différentielle sur les sorties des corrélateurs complexes.

5. Procédé selon la revendication 1 ou 2, **caractérisé en ce que** l'on compense le différentiel de retard de groupe à la réception dans le mobile pour chaque source par une correction différentielle sur la phase des codes locaux.

6. Procédé selon l'une des revendications 4 ou 5, **caractérisé en ce que** l'identification des défauts des sources est réalisée par le récepteur du mobile lui même.

7. Procédé selon la revendication 1 ou 2, **caractérisé en ce que** l'identification des défauts dus aux sources est réalisée au sol, pour chaque source dans au moins une station fixe recevant les corrections réalisées dans les récepteurs des différentes stations au sol en communication avec cette station, les différentes corrections ainsi reçues étant moyennées, filtrées et transmises au mobile.

8. Procédé selon la revendication 7, **caractérisé en ce que** la moyenne des corrections entre les stations sol est effectuée globalement pour l'ensemble des sources grâce à un filtre aux moindres carrés en introduisant des inconnues supplémentaires que sont les biais propres aux récepteurs au sol.

9. Procédé selon l'une des revendications 1 à 8, **caractérisé en ce** chaque canal de réception de source utilise un seul intégrateur de phase de code local.

10. Procédé selon l'une des revendications 1 à 9, **caractérisé en ce** chaque canal de réception de source utilise un seul générateur de code local.

11. Procédé selon l'une des revendications 1 à 10, **caractérisé en ce que** chaque canal de réception de source utilise deux lignes à retard cadencées dont une paramétrique pour produire deux codes locaux à partir du code produit par le générateur de code.

12. Procédé selon l'une des revendications 1 à 8, **caractérisé en ce que** chaque canal de réception de source utilise un seul intégrateur de phase de porteuse locale, et **en ce que** en sortie de l'intégrateur, la phase du code local est ajoutée et soustraite à la phase de porteuse locale pour produire les phases des deux porteuses locales servant à démoduler les deux composantes du signal reçu.

13. Procédé selon l'une des revendications précédentes, **caractérisé en ce que** les sources sont l'un au moins des systèmes suivants : satellites de géo-positionnement, pseudolites fixes, pseudolites mobiles, émetteurs mobiles d'aéronef, de véhicule terrestre ou de navire.

FIG.1

FIG.2

Retard groupe :

$\tau = -df/d\omega/2\pi$

f

Retard phase :

$\varphi$

f

Densité de
puissance spectrale:

$F_G$
$= f_{port} - f_{sous-port}$

$F_{port}$

$F_D$
$= f_{port} + f_{sous-port}$

f

## FIG.3

G

D

| Canal SV n°1 | $\varepsilon_{\Delta\varphi\,SV\,1}$ | Filtre Calibration SV n°1 |
| $\Delta\varphi_{cal\,SV\,1}$ |

| Canal SV n°2 | $\varepsilon_{\Delta\varphi\,SV\,2}$ | Filtre Calibration SV n°2 |
| $\Delta\varphi_{cal\,SV\,2}$ |

| Canal SV n°: i | $\varepsilon_{\Delta\varphi\,SVi}$ | Filtre Calibration SV n°i |
| $\Delta\varphi_{cal\,SVi}$ |

| Canal SV n°N | $\varepsilon_{\Delta\varphi\,SV\,N}$ | Filtre Calibration SV n°N |
| $\Delta\varphi_{cal\,SVN}$ |

## FIG.8

FIG.4

FIG.5

FIG.6

FIG.7

FIG.9

| | Europäisches Patentamt European Patent Office Office européen des brevets | **RAPPORT DE RECHERCHE EUROPEENNE** | Numéro de la demande EP 08 16 0151 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | FR 2 892 202 A (THALES SA [FR]) 20 avril 2007 (2007-04-20) * figures 4,5 * * page 11, ligne 1 - page 13, ligne 19 * ----- | 1-13 | INV. G01S1/00 |
| A | VINCENT HEIRIES ET AL.: "Analysis of Non Ambiguous BOC Signal Acquisition Performance" PROC. OF THE 17TH INT. TECHNICAL MEETING OF THE SATELLITE DIVISION OF THE INSTITUTE OF NAVIGATION ION GNSS 2004, 21 septembre 2004 (2004-09-21), pages 2611-2622, XP002471945 Long Beach, CA ,USA * pages 2613-2614, section: BPSK-like technique * * pages 2616-2617, section: Filtering Effects * ----- | 1-13 | |
| A | US 2005/024263 A1 (SHARPE RICHARD T [US] ET AL) 3 février 2005 (2005-02-03) * figure 1 * * alinéa [0013] * * alinéa [0065] * * alinéa [0067] * ----- | 7,8 | DOMAINES TECHNIQUES RECHERCHES (IPC) G01S |
| A | US 6 552 680 B1 (BARBER CLAYTON [US] ET AL) 22 avril 2003 (2003-04-22) * colonne 1, ligne 56 - colonne 2, ligne 6 * ----- | 7,8 | |

Le présent rapport a été établi pour toutes les revendications

| Lieu de la recherche | Date d'achèvement de la recherche | Examinateur |
|---|---|---|
| Munich | 10 novembre 2008 | Hekmat, Taymoor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 16 0151

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-11-2008

| Document brevet cité au rapport de recherche | | Date de publication | Membre(s) de la famille de brevet(s) | | Date de publication |
|---|---|---|---|---|---|
| FR 2892202 | A | 20-04-2007 | CA | 2625930 A1 | 19-04-2007 |
| | | | EP | 1934624 A1 | 25-06-2008 |
| | | | WO | 2007042461 A1 | 19-04-2007 |
| US 2005024263 | A1 | 03-02-2005 | AT | 398778 T | 15-07-2008 |
| | | | AU | 2004286519 A1 | 12-05-2005 |
| | | | BR | PI0412086 A | 05-09-2006 |
| | | | CA | 2528941 A1 | 12-05-2005 |
| | | | CN | 1833180 A | 13-09-2006 |
| | | | EP | 1654559 A2 | 10-05-2006 |
| | | | JP | 2007500845 T | 18-01-2007 |
| | | | WO | 2005043186 A2 | 12-05-2005 |
| US 6552680 | B1 | 22-04-2003 | US | 6646594 B1 | 11-11-2003 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2841069

- FR 2892202

**Littérature non-brevet citée dans la description**

- **N. MARTIN ; V. LEBLOND ; G. GUILLOTEL ; V. HEIRIES.** *ION GPS/GNSS 2003,* 09 Septembre 2003, 188-198